# EUROPEAN PATENT APPLICATION

(11) **EP 4 177 043 A1**
(43) Date of publication of application: **10.05.2023**
(21) Application number: 21913697.5
(22) Date of filing: 30.11.2021
(51) Int. Cl.: B29C 64/205, B29C 64/209, B29C 64/227, B29C 64/393, B29C 64/336, B33Y 30/00, B33Y 40/00, B33Y 50/02

(54) **PRINT HEAD SWITCHING ASSEMBLY AND PRINTER**

(30) Priority: 30.12.2020 CN 202011601892
(71) Applicant: Shenzhen Anycubic Technology Co., Ltd., Shenzhen, Guangdong 518000 (CN)
(72) Inventor: WANG, Jingjie, Shenzhen, Guangdong 518000 (CN); FU, Dongchu, Shenzhen, Guangdong 518000 (CN); OUYANG, Xin, Shenzhen, Guangdong 518000 (CN)
(74) Representative: Bird & Bird LLP
(86) International application number: PCT/CN2021/134250
(87) International publication number: WO 2022/142956

(57) **Abstract**

A print head switching assembly includes a support assembly, a drive assembly, a first print head (1), and a second print head (2). The drive assembly is arranged on the support assembly, the first print head (1) is arranged at a first end (3) of a first connecting member (5), and the second print head (2) is arranged at a first end (4) of a second connecting member (6). When the first print head (1) is in an operating state, the second connecting member (6), driven by a drive member, moves the second print head (2) to a target position, such that the distance between the second print head (2) and a print object is greater than the distance between the first print head (1) and the print object. The second print head (2) is driven to a target position by means of the drive assembly prevents the print head from scraping the print object when pausing to print.

## Description

### TECHNICAL FIELD

The present disclosure relates to the technical field of printing, and in particular to a print head switching assembly and a printer.

### BACKGROUND

A single-head printer can only print a model in one color, which is difficult to meet the diverse printing needs of users, such as when the model to be printed has two colors. Compared with the single-head printer, a dual-head printer has the advantages of simultaneous output of two colors, more realistic printing performance, and clearer color difference.

The dual-head printer typically has two nozzles fixed to heads. During printing with the dual-head printer, the two heads operate alternately, that is, when one of the heads operates, the other head pauses, and the other head operates after the former operates for a period of time. In the prior art, the head that pauses printing and the head that is operating cannot be switched vertically, such that when the head that is operating is printing, the head that pauses printing can scrape a print object, thus affecting the printing performance.

### SUMMARY

Embodiments of the present disclosure provide a print head switching assembly and a printer, preventing a head from scraping a print object when pausing to print, thus improving printing performance of the printer.

In order to achieve the above purpose, in a first aspect, an embodiment of the present disclosure provides a print head switching assembly, including a support assembly, a drive assembly, a first print head, and a second print head.
The drive assembly includes a first connecting member, a second connecting member, and a drive member, the first connecting member, the second connecting member and the drive member are arranged on the support assembly, the first print head is arranged at a first end of the first connecting member, and the second print head is arranged at a first end of the second connecting member.
The drive member is separately connected to a second end of the first connecting member and a second end of the second connecting member.
When the first print head is in an operating state, the second connecting member, driven by the drive member, moves the second print head to a target position, such that the distance between the second print head and a print object is greater than the distance between the first print head and the print object.

Optionally, the support assembly includes a first fixing member, and the drive member includes a gear and a rack.
The first fixing member is further provided with a guide slot, and the rack is accommodated in the guide slot.
The gear is connected to the rack in an engaging manner, and the gear rotates to slide the rack along the guide slot.
A first side of the rack is provided with a first protrusion, the second end of the first connecting member is slidably connected to the first side of the rack, the second end of the second connecting member is slidably connected to the first side of the rack, and the first side of the rack is a side opposite to the side where the rack is in contact with a slot bottom of the guide slot.

Optionally, the drive member includes a cam and a rotating shaft; a first end of the rotating shaft is arranged on the support assembly, and a second end of the rotating shaft passes through the center of the cam.
An outer cam edge of the cam is provided with a second protrusion, and the outer cam edge of the cam is separately slidably connected to the second end of the first connecting member and the second end of the second connecting member.

Optionally, the drive assembly further includes a positioning rod, the rack is further provided with a positioning opening, and the positioning rod passes through the positioning opening and is connected to the first fixing member.

Optionally, the support assembly further includes a second fixing member, and the drive assembly further includes a first spring and a second spring.

A first end of the first spring is connected to the second fixing member, and a second end of the first spring is connected to a third end of the first connecting member.
A first end of the second spring is connected to the second fixing member, and a second end of the second spring is connected to a third end of the second connecting member.

Optionally, the first fixing member is provided with a first through hole and a second through hole, the first end of the first connecting member passes through the first through hole and is connected to the first print head, and the first end of the second connecting member passes through the second through hole and is connected to the second print head.

Optionally, the first fixing member is further provided with a first clamp slot and a second clamp slot, the first connecting member is provided with a first positioning member, and the second connecting member is provided with a second positioning member.
The first clamp slot is coaxial with the first through hole, the second clamp slot is coaxial with the second through hole, and the height of slot bottom of the first clamp slot is the same as that of the second clamp slot.
When the first print head is in an operating state, the first positioning member abuts against a slot bottom of the first clamp slot.
When the second print head is in an operating state, the second positioning member abuts against a slot bottom of the second clamp slot.

Optionally, the first connecting member is provided with a first groove at a position corresponding to the first through hole, and the second connecting member is provided with a second groove at a position corresponding to the second through hole.

Optionally, the first fixing member further includes a first guide sleeve and a second guide sleeve, the first guide sleeve is arranged in the first through hole, and the second guide sleeve is arranged in the second through hole.
The first end of the first connecting member passes through the first guide sleeve and is connected to the first print head, and the first end of the second connecting member passes through the second guide sleeve and is connected to the second print head.

In a second aspect, an embodiment of the present disclosure provides a printer, including a print head switching assembly according to the first aspect.

In the embodiment of the present application, the print head switching assembly includes a support assembly, a drive assembly, a first print head, and a second print head. The drive assembly is arranged on the support assembly, the first print head is arranged at a first end of a first connecting member, and the second print head is arranged at a first end of a second connecting member. When the first print head is in an operating state, the second connecting member, driven by a drive member, moves the second print head to a target position, such that the distance between the second print head and a print object is greater than the distance between the first print head and the print object. The second print head being driven to a target position by means of the drive assembly prevents the print head from scraping the print object when pausing to print, thus improving printing performance.

### BRIEF DESCRIPTION OF THE DRAWINGS

In order to illustrate the technical solutions in the embodiments of the present disclosure more clearly, the drawings in the specification will be illustrated blow. Obviously, the following drawings are merely embodiments of the present application, and for those of ordinary skill in the art, other drawings can be obtained from these drawings listed without any creative efforts.
FIG. 1 is a first schematic structural diagram of a print head switching assembly provided in an embodiment of the present application;
FIG. 2 is a second schematic structural diagram of a print head switching assembly provided in an embodiment of the present application;
FIG. 3 is a third schematic structural diagram of a print head switching assembly provided in an embodiment of the present application;
FIG. 4 is a fourth schematic structural diagram of a print head switching assembly provided in an embodiment of the present application;
FIG. 5 is a fifth schematic structural diagram of a print head switching assembly provided in an embodiment of the present application;
FIG. 6 is a sixth schematic structural diagram of a print head switching assembly provided in an embodiment of the present application;
FIG. 7 is a seventh schematic structural diagram of a print head switching assembly provided in an embodiment of the present application;
FIG. 8 is an eighth schematic structural diagram of a print head switching assembly provided in an embodiment of the present application; and
FIG. 9 is a ninth schematic structural diagram of a print head switching assembly provided in an embodiment of the present application.

### DETAILED DESCRIPTION OF THE EMBODIMENTS

The technical solutions in the embodiments of the present disclosure will be clearly and completely described below in conjunction with the drawings in the embodiments of the present application. Obviously, the embodiments described are merely some rather than all of the embodiments of the present application. All other embodiments obtained by those of ordinary skill in the art on the basis of the embodiments in the present disclosure without creative efforts shall fall within the scope of protection of the present application.

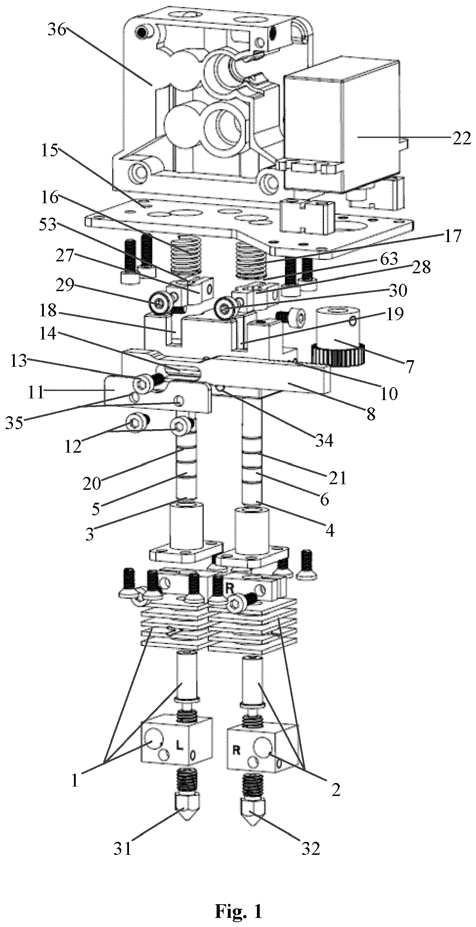

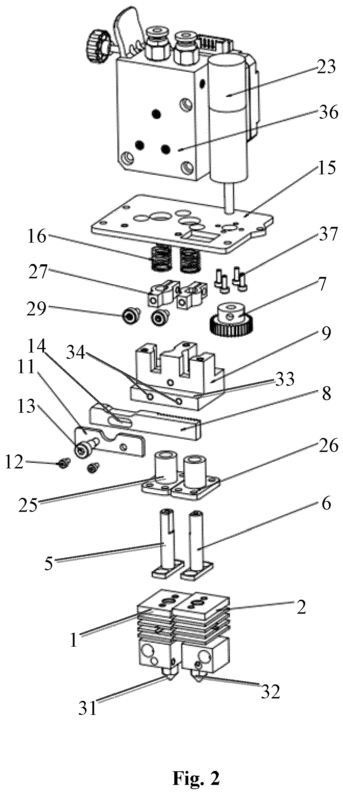

With reference to FIGS. 1 and 2, an embodiment of the present disclosure provides a print head switching assembly, including a support assembly, a drive assembly, a first print head 1, and a second print head 2.
The drive assembly includes a first connecting member 5, a second connecting member 6, and a drive member. The first connecting member 5, the second connecting member 6, and the drive member are arranged on the support assembly. The first print head 1 is arranged at a first end 3 of the first connecting member, and the second print head 2 is arranged at a first end 4 of the second connecting member.
The drive member is separately connected to a second end of the first connecting member 5 and a second end of the second connecting member 6.
When the first print head 1 is in an operating state, the second connecting member 6, driven by the drive member, moves the second print head 2 to a target position, such that the distance between the second print head 2 and a print object is greater than the distance between the first print head 1 and the print object.

Specifically, the first end 3 of the first connecting member can be connected to the first end of the first print head 1, the first end 4 of the second connecting member can be connected to the first end of the second print head 2, the second end of the first print head 1 is provided with a first nozzle 31, and the second end of the second print head 2 is provided with a second nozzle 32.

The embodiment of the present disclosure can be a dual-head printer, can be a multi-head printer. During printing with the dual-head printer, two heads operate alternately, that is, when one of the heads operates, the other head pauses, and the other head (the head is equivalent to the print head) operates after the former operates for a period of time. When the first print head 1 is in an operating state, the second connecting member, driven by the drive member, moves the second print head 2 to the target position, such that the distance between the second print head 2 and a print object is greater than the distance between the first print head 1 and the print object, so as to prevent the second print head 2 that pauses printing from scraping the print object that can also be interpreted as a print model.

Alternatively, when the second print head 2 is in an operating state, the first connecting member, driven by the drive member, moves the first print head 1 to a target position, such that the distance between the first print head 1 and a print object is greater than the distance between the second print head 2 and the print object, so as to prevent the first print head 1 that pauses printing from scraping the print object.

It should be appreciated that the support assembly provided in the embodiment of the present disclosure is used for fixing the parts to be fixed, such as the drive assembly, the first print head 1 and the second print head 2, of the print head switching assembly. The drive assembly provided in the embodiment of the present disclosure can include a power source, such as an electric motor 23, and other connecting members, to drive the first print head 1 and the second print head 2 to move.

In the embodiment of the present application, the print head switching assembly includes the support assembly, the drive assembly, the first print head 1, and the second print head 2, the drive assembly is arranged on the support assembly, the first print head 1 is arranged at a first end 3 of a first connecting member, and the second print head 2 is arranged at a first end 4 of a second connecting member. When the first print head 1 is in an operating state, the second connecting member 6, driven by the drive member, moves the second print head 2 to the target position, such that the distance between the second print head 2 and a print object is greater than the distance between the first print head 1 and the print object. The second print head 2 being driven to the target position by means of the drive assembly prevents the head from scraping the print object when pauses printing, thus improving the printing performance.

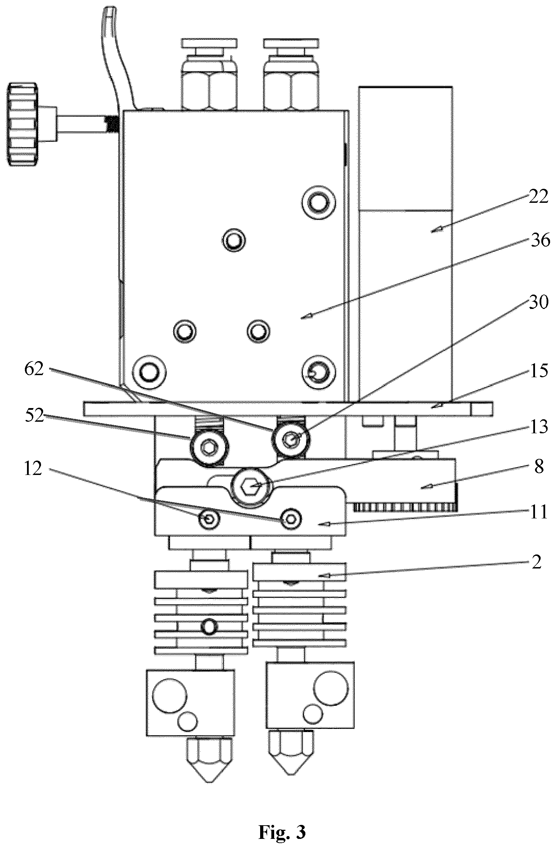

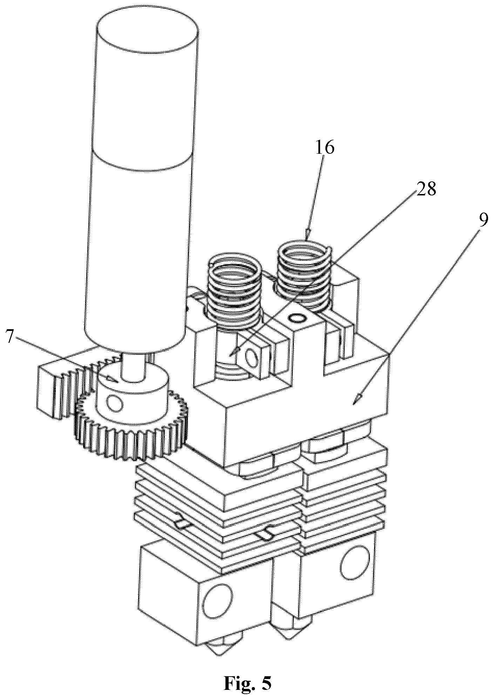

Optionally, as shown in FIGS. 3 and 5, the support assembly includes a first fixing member 9, and the drive member includes a gear 7 and a rack 8.

The first fixing member 9 is further provided with a guide slot, and the rack 8 is accommodated in the guide slot.
The gear 7 is connected to the rack 8 in an engaging manner, and the gear 7 rotates to slide the rack 8 along the guide slot.
A first side of the rack 8 is provided with a first protrusion 10, a second end of the first connecting member 5 is slidably connected to the first side of the rack 8, a second end of the second connecting member 6 is slidably connected to the first side of the rack 8, and the first side of the rack 8 is a side opposite to the side where the rack 8 is in contact with a slot bottom of the guide slot.

Specifically, as shown in FIGS. 1 and 2, the first fixing member 9 can be provided with a stair-shaped step 33, the step 33 is provided with first screw holes 34, a press plate 11 is provided with second screw holes 35 at positions corresponding to the first screw holes 34, first screws 12 sequentially pass through the second screw holes 35 and the first screw holes 34 and fix the press plate 11 to the first fixing member 9, and the press plate 11 and the step 33 enclose a guide slot.

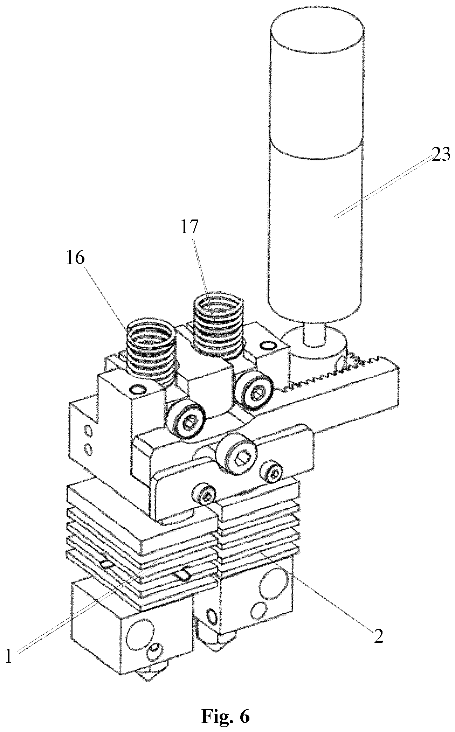

As shown in FIGS. 2, 4, 6 and 8, both the first connecting member 5 and the second connecting member 6 can be a cylindrical metal rod, the first end 3 of the first connecting member is connected to the first print head 1 by means of welding, by means of bolting, and the first end 4 of the second connecting member is connected to the second print head 2 by means of welding, by means of bolting. The second end of the first connecting member 5 can be provided with a first clasping sleeve 27, the first clasping sleeve 27 circumferentially clasps the second end of the first connecting member 5 and locks the second end of the first connecting member 5, the first clasping sleeve 27 is provided with a screw hole, and a first screw bearing 29 can be connected to the first clasping sleeve 27 through the screw hole. The first screw bearing 29 can be arranged perpendicular to the first connecting member 5. Similarly, the second end of the second connecting member 6 can be provided with a second clasping sleeve 28, the second clasping sleeve 28 circumferentially clasps the second end of the second connecting member 6 and locks the second end of the second connecting member 6, the second clasping sleeve 28 is provided with a screw hole, and a second screw bearing 30 can be connected to the second clasping sleeve 28 through the screw hole. The second screw bearing 30 can be arranged perpendicular to the second connecting member 6. Outer rings of the first screw bearing 29 and second screw bearing 30 are slidably connected to the first side of the rack 8. When the gear 7 rotates to slide the rack 8 along the guide slot, as the first side of the rack 8 is provided with the first protrusion 10, the outer rings of the first screw bearing 29 and second screw bearing 30 will undulate with the first protrusion 10 when the first screw bearing and second screw bearing slide along the first side. With the design of the number, shape and size of the first protrusion 10 through pre-computation, the first screw bearing 29 when undulating, the second screw bearing 30 when undulating moves the first connecting member 5 and then moves the first print head 1 to the target position, moves the second connecting member 6 and then moves the second print head 2 to the target position. It should be appreciated that when the first print head 1 is in an operating state, the outer ring of the second screw bearing 30 moves from a low and flat place of the first side to the first protrusion 10, and in this process, the second screw bearing 30 moves toward the target position of the second print head. Since the second screw bearing 30, the second connecting member 6 and the second print head 2 are fixedly connected together, the second screw bearing 30 moves the second print head 2 to the target position after this process, such that the distance between the second print head 2 and a print object is greater than the distance between the first print head 1 and the print object. Similarly, when the first screw bearing 29 is located at the first protrusion 10, the first print head 1 is located at the target position, such that the distance between the first print head 1 and the print object is greater than the distance between the second print head 2 and the print object.

It should be appreciated that the foregoing takes only the first print head 1 and the second print head 2 as an example, but the embodiments of the present disclosure can further apply to a multi-head printer including three and more print heads by extending the travel of the rack 8 and additionally providing more first protrusions 10 on the first side of the rack 8.

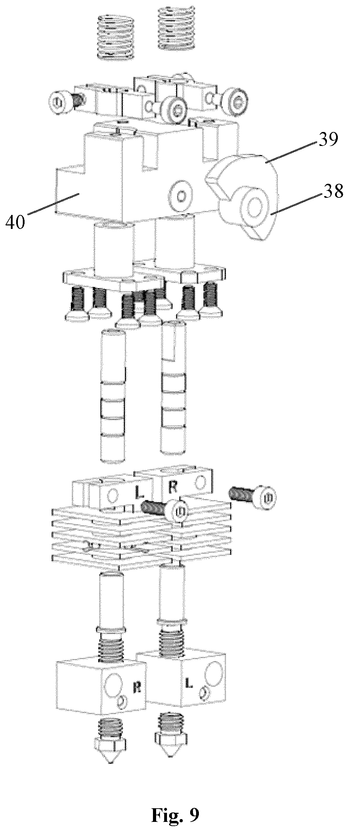

Optionally, with reference to FIG. 9, the drive member includes a cam 38 and a rotating shaft. A first end of the rotating shaft is arranged on the support assembly, and a second end of the rotating shaft passes through the center of the cam 38. An outer cam edge of the cam 38 is provided with a second protrusion 39, and the outer cam edge of the cam 38 is separately slidably connected to the second end of the first connecting member 5 and the second end of the second connecting member 6.

Specifically, the support assembly can further include a third fixing member 40. The same effect as the above embodiments can also be achieved by substituting the gear 7 and the rack 8 with the cam 38 and substituting the first fixing member 9 with the third fixing member 40. The first end of the rotating shaft is arranged on the third fixing member 40, the cam 38 can be fixed on the third fixing member 40 through the rotating shaft, the third fixing member 40 is provided with a through hole corresponding to the rotating shaft, the first end of the rotating shaft can pass through the through hole and be connected to a steering gear 22, the steering gear 22 is used for driving the rotating shaft to rotate, and a second end of the rotating shaft passes through the center of the cam 38.

It should be appreciated that the outer cam edge of the cam 38 is not in a regular semicircular shape, and the number and shape of the second protrusion 39 on the outer cam edge of the cam 38 can be designed according to practical needs. Thus, during rotation of the cam 38, when the second end of the first connecting member 5 moves from a low and flat place of the outer cam edge of the cam 38 to the second protrusion 39, the first connecting member 5 moves toward a print object, and the second connecting member 6 moves away from the print object, so as to move the second print head 2 to the target position, such that the distance between the second print head 2 and the print object is greater than the distance between the first print head 1 and the print object. Alternatively, when the second end of the second connecting member 6 moves from the low and flat place of the outer cam edge of the cam 38 to the second protrusion 39, the first connecting member 5 moves away from the print object, and the second connecting member 6 moves toward the print object, so as to move the first print head 1 to the target position, such that the distance between the first print head 1 and the print object is greater than the distance between the second print head 2 and the print object. For the specific structure and principle of moving the first print head 1, moving the second print head 2 to the target position by means of the cam 38, reference can be made to the above embodiments, which will not be repeated herein to avoid repetition.

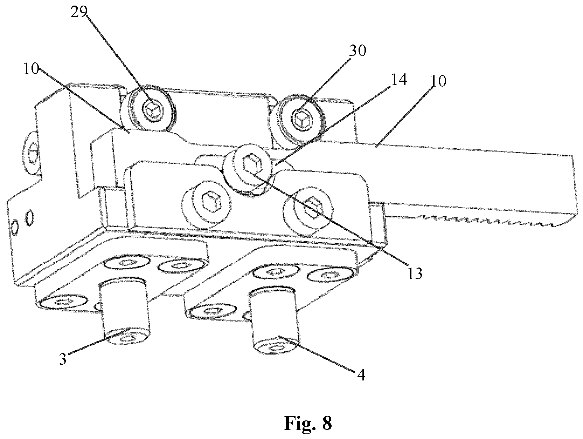

Optionally, as shown in FIG. 8, the drive assembly further includes a positioning rod 13, the rack 8 is further provided with a positioning opening 14, and the positioning rod 13 passes through the positioning opening 14 and is connected to the first fixing member 9.

Specifically, the positioning rod 13 can be a shoulder screw, a position of the first fixing member 9 corresponding to the positioning opening 14 is provided with a screw hole, and the positioning rod 13 passes through the positioning opening 14 and is connected to the first fixing member 9 through the screw hole. The positioning opening 14 can be in a rectangular shape, and the size of the positioning opening 14 can be calculated according to specific needs.

The positioning opening 14 is provided, such that the range of movement of the rack 8 can be limited, thus preventing the rack 8 from sliding out of the guide slot.

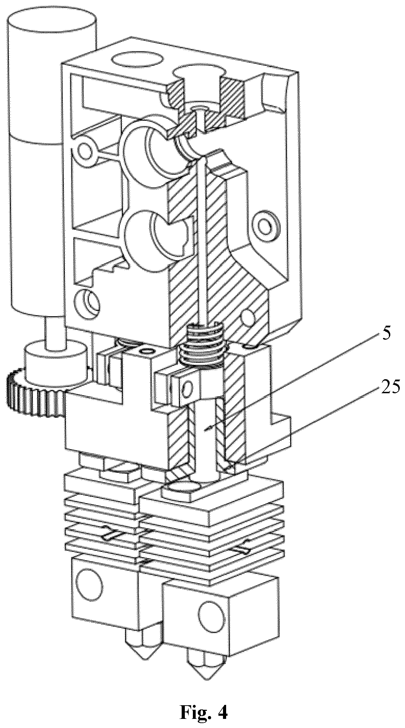

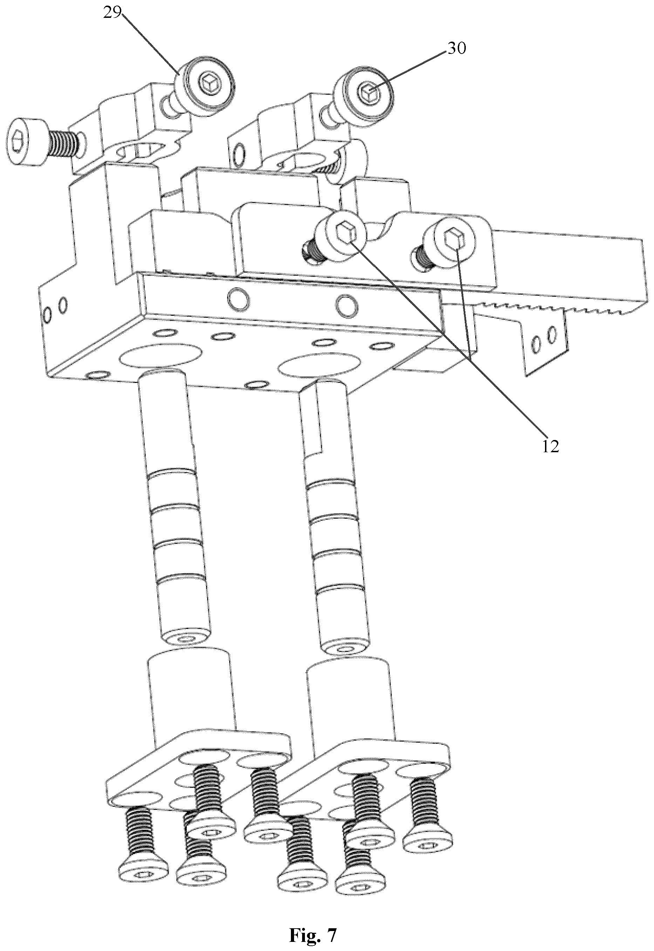

Optionally, as shown in FIGS. 4 and 7, the first fixing member 9 is provided with a first through hole and a second through hole, the first end of the first connecting member 5 passes through the first through hole and is connected to the first print head 1, and the first end of the second connecting member 6 passes through the second through hole and is connected to the second print head 2.

The first through hole and the second through hole are provided, such that the first connecting member 5 and the second connecting member 6 can move in the first through hole and the second through hole, respectively, and thus the movement precision of the first connecting member 5 and the second connecting member 6 during switching can be increased.

Optionally, as shown in FIGS. 1, 2 and 4, the support assembly further includes a second fixing member 15, and the drive assembly further includes a first spring 16 and a second spring 17.
A first end of the first spring 16 is connected to the second fixing member 15, and a second end of the first spring 16 is connected to a third end of the first connecting member 5.
A first end of the second spring 17 is connected to the second fixing member 15, and a second end of the second spring 17 is connected to a third end of the second connecting member 6.

Specifically, the second fixing member 15 can be a rectangular metal plate. A first side of the second fixing member 15 can be provided with an extruder assembly 36. The extruder assembly 36 stores a print material therein, and the extruder assembly 36 extrudes out the print material during printing. The first end of the first spring 16 passes through an opening in the second fixing member 15 corresponding to the position where the first spring 16 is located, and the first end of the second spring 17 passes through an opening in the second fixing member 15 corresponding to the position where the second spring 17 is located. The second end of the first spring 16 can abut against the third end of the first connecting member 5, and the second end of the first spring 16 can abut against an outer ring of the first clasping sleeve 27. The second end of the second spring 17 can abut against the third end of the second connecting member 6, and the second end of the second spring 17 can abut against an outer ring of the second clasping sleeve 28.

The first spring 16 is provided, such that when the first print head 1, driven by the first connecting member 5, moves away from a print object when the first print head 1 pauses operating, the first spring 16 fills a gap between the first connecting member 5 and the second fixing member 15; and when the first print head 1, driven by the first connecting member 5, moves toward the print object when the first print head 1 operates, the first spring 16 applies to the first connecting member 5 an elastic force pointing to the print object, thus preventing the occurrence of the first connecting member 5 being unable to move toward the print object due to the insufficient gravity of the first connecting member 5 and the first print head 1. In conclusion, the first spring 16 being provided can improve the reliability of operation of the printer.

The second spring 17 being provided to achieve the effect in a similar way, which will not be repeated herein.

As shown in FIG. 2, the gear 7 can also be fixed to the second fixing member 15 by means of second screws 37.

Optionally, as shown in FIG. 1, the first fixing member 9 is further provided with a first clamp slot 18 and a second clamp slot 19, the first connecting member 5 is provided with a first positioning member, and the second connecting member 6 is provided with a second positioning member.
The first clamp slot 18 is coaxial with the first through hole, the second clamp slot 19 is coaxial with the second through hole, and the height of slot bottom of the first clamp slot 18 is the same as that of the second clamp slot 19.
When the first print head 1 is in an operating state, the first positioning member abuts against the slot bottom of the first clamp slot 18.
When the second print head 2 is in an operating state, the second positioning member abuts against the slot bottom of the second clamp slot 19.

Specifically, the first positioning member can be an outer ring structure of the first clasping sleeve 27, and the second positioning member can be an outer ring structure of the second clasping sleeve 28. The first clamp slot 18 and the second clamp slot 19 having the same height of slot bottom are provided, such that when the first print head 1 is in an operating state, the first positioning member abuts against the slot bottom of the first clamp slot 18; and when the second print head 2 is in an operating state, the second positioning member abuts against the slot bottom of the second clamp slot 19. Thus, it can be ensured that after print head switching, the different print heads are at a same distance from a print object during operation.

Optionally, as shown in FIG. 1, the first connecting member 5 is provided with a first groove 20 at a position corresponding to the first through hole, and the second connecting member 6 is provided with a second groove 21 at a position corresponding to the second through hole.

Specifically, both the first groove 20 and the second groove 21 can be a circular groove, and both the first groove 20 and the second groove 21 can both be provided as one or more grooves. The first groove 20 and the second groove 21 hold lubricating oils, such that it can reduce the frictional resistance of the first connecting member 5 moving in the first through hole and the frictional resistance of the second connecting member 6 moving in the second through hole, thus improving movement flexibility of the first connecting member 5 and the first connecting member 5.

Optionally, as shown in FIG. 1, the drive assembly further includes a steering gear 22 and a third connecting member 24, and the steering gear 22 is connected to the gear 7 by means of the third connecting member 24.

Specifically, the steering gear 22 provides power for rotation of the gear 7. One end of the third connecting member 24 is connected to the steering gear 22, and the other end of the third connecting member 24 can be connected to a through hole at the axis of the gear 7, such that the gear 7 is driven to rotate. When the steering gear 22 operates, in combination with the positioning rod 13 and the positioning opening 14 as described above, the first print head 1 and the second print head 2 are controlled to move to the target position. A control method can be implemented as follows. When the rack 8 is driven clockwise by means of the gear 7 to slide, in a first direction, in the guide slot to a first end of the positioning opening 14, the rack 8 abuts against the positioning rod 13 and cannot continue to slide in the first direction, the steering gear 22 has increased current, a control system detects the change in the current, and when the current exceeds a preset value, the control system sends a stop signal to notify the steering gear 22 to power off and stop rotating so as to achieve positioning of the motion of the rack 8 driven by the gear 7, and then the first print head 1 is moved to the target position according to a pre-design.

The steering gear 22 has a specific rotation angle and can rotate back and forth by an angle within a specified range and stop at a point, and the control solution where the steering gear 22 is used to control the gear 7 is simple.

It should be appreciated that as shown in FIG. 2, an electric motor 23 can also be used to provide power for the gear 7. The electric motor 23 can be a direct-current electric motor, and can also be a step electric motor. The control principle of the electric motor 23 is the same as that of the steering gear 22, which will not be repeated herein.

Optionally, the first fixing member 9 further includes a first guide sleeve 25 and a second guide sleeve 26. The first guide sleeve 25 is arranged in the first through hole, and the second guide sleeve 26 is arranged in the second through hole.
The first end of the first connecting member 5 passes through the first guide sleeve 25 and is connected to the first print head 1, and the first end of the second connecting member 6 passes through the second guide sleeve 26 and is connected to the second print head 2.

The first guide sleeve 25 and the second guide sleeve 26 are provided, such that gaps in the first through hole and the second through hole can be filled, so as to reduce the shaking of the first connecting member 5 in the first through hole and the shaking of the second connecting member 6 in the second through hole, thus improving printing performance of the printer.

An embodiment of the present disclosure further provides a printer, including a print head switching assembly provided in the above embodiments. For the structure and principle of the print head switching assembly, reference can be made to the above embodiments, which will not be repeated herein. Since the printer provided in the embodiment of the present disclosure includes the print head switching assembly in the above embodiments, the printer provided in the embodiment of the present invention has all beneficial effects of the print head switching assembly in the above embodiments.

The embodiments of the present disclosure are described above in conjunction with the drawings, but the present disclosure is not limited to the detailed description of the embodiments described above which are only illustrative rather than restrictive. Those of ordinary skill in the art can also derive many variations from the inspiration of the present disclosure without departing from the spirit of the present disclosure and the scope of protection of the claims, and the variations shall all fall within the scope of protection of the present application.

## Claims

1. A print head switching assembly, comprising a support assembly, a drive assembly, a first print head, and a second print head, wherein
the drive assembly comprises a first connecting member, a second connecting member, and a drive member, the first connecting member, the second connecting member and the drive member are arranged on the support assembly, the first print head is arranged at a first end of the first connecting member, and the second print head is arranged at a first end of the second connecting member;
the drive member is separately connected to a second end of the first connecting member and a second end of the second connecting member; and
when the first print head is in an operating state, the second connecting member, driven by the drive member, moves the second print head to a target position, such that the distance between the second print head and a print object is greater than the distance between the first print head and the print object.

2. The print head switching assembly according to claim 1, wherein the support assembly comprises a first fixing member, and the drive member comprises a gear and a rack;
the first fixing member is further provided with a guide slot, and the rack is accommodated in the guide slot;
the gear is connected to the rack in an engaging manner, and the gear rotates to slide the rack along the guide slot; and
a first side of the rack is provided with a first protrusion, the second end of the first connecting member is slidably connected to the first side of the rack, the second end of the second connecting member is slidably connected to the first side of the rack, and the first side of the rack is a side opposite to the side where the rack is in contact with a slot bottom of the guide slot.

3. The print head switching assembly according to claim 1, wherein the drive member comprises a cam and a rotating shaft;
a first end of the rotating shaft is arranged on the support assembly, and a second end of the rotating shaft passes through the center of the cam; and
an outer cam edge of the cam is provided with a second protrusion, and the outer cam edge of the cam is separately slidably connected to the second end of the first connecting member and the second end of the second connecting member.

4. The print head switching assembly according to claim 2, wherein the drive assembly further comprises a positioning rod, the rack is further provided with a positioning opening, and the positioning rod passes through the positioning opening and is connected to the first fixing member.

5. The print head switching assembly according to claim 2, wherein the support assembly further comprises a second fixing member, and the drive assembly further comprises a first spring and a second spring;
a first end of the first spring is connected to the second fixing member, and a second end of the first spring is connected to a third end of the first connecting member; and
a first end of the second spring is connected to the second fixing member, and a second end of the second spring is connected to a third end of the second connecting member.

6. The print head switching assembly according to claim 2, wherein the first fixing member is provided with a first through hole and a second through hole, the first end of the first connecting member passes through the first through hole and is connected to the first print head, and the first end of the second connecting member passes through the second through hole and is connected to the second print head.

7. The print head switching assembly according to claim 6, wherein the first fixing member is further provided with a first clamp slot and a second clamp slot, the first connecting member is provided with a first positioning member, and the second connecting member is provided with a second positioning member;
the first clamp slot is coaxial with the first through hole, the second clamp slot is coaxial with the second through hole, and the height of slot bottom of the first clamp slot is the same as that of the second clamp slot;
when the first print head is in an operating state, the first positioning member abuts against a slot bottom of the first clamp slot; and
when the second print head is in an operating state, the second positioning member abuts against a slot bottom of the second clamp slot.

8. The print head switching assembly according to claim 6, wherein the first connecting member is provided with a first groove at a position corresponding to the first through hole, and the second connecting member is provided with a second groove at a position corresponding to the second through hole.

9. The print head switching assembly according to claim 6, wherein the first fixing member further comprises a first guide sleeve and a second guide sleeve, the first guide sleeve is arranged in the first through hole, and the second guide sleeve is arranged in the second through hole; and
the first end of the first connecting member passes through the first guide sleeve and is connected to the first print head, the first end of the second connecting member passes through the second guide sleeve and is connected to the second print head.

10. A printer, comprising a print head switching assembly according to any one of claims 1 to 9.
